# EUROPEAN PATENT SPECIFICATION

(11) **EP 2 772 629 B1**
(45) Date of publication and mention of the grant of the patent: **09.08.2017**
(21) Application number: 11874782.3
(22) Date of filing: 24.10.2011
(51) Int. Cl.: F02D 23/00, F02B 37/22, F02D 41/00, F02B 37/24, F02D 41/14

(54) **CONTROL DEVICE FOR DIESEL ENGINE EQUIPPED WITH TURBOCHARGER**
STEUERUNGSVORRICHTUNG FÜR EINEN DIESELMOTOR MIT EINEM TURBOLADER
DISPOSITIF DE RÉGULATION POUR MOTEUR DIESEL ÉQUIPÉ D'UN TURBOCOMPRESSEUR

(43) Date of publication of application: 03.09.2014
(73) Proprietor: Toyota Jidosha Kabushiki Kaisha, Toyota-shi, Aichi 471-8571 (JP)
(72) Inventor: IBUKI, Taku, Toyota-shi Aichi 471-8571 (JP)
(74) Representative: Intès, Didier Gérard André
(86) International application number: PCT/JP2011/074441
(87) International publication number: WO 2013/061395

(56) References cited:
- FR-A3- 2 948 977
- JP-A- 2006 188 999
- JP-A- 2008 051 042
- JP-A- 2010 203 344
- JP-A- 2010 203 344
- US-A- 5 174 119
- US-A1- 2003 010 019

## Description

### Technical Field

The present invention relates to a control device for a diesel engine equipped with a turbocharger for an automobile, and particularly relates to a control device for a diesel engine equipped with a turbocharger capable of actively controlling a supercharging pressure by control of a rotational speed of a turbine by an actuator.

### Background Art

In a diesel engine equipped with a variable geometry turbocharger having a variable nozzle, the supercharging pressure can be actively controlled by control of the rotational speed of a turbine by the opening of the variable nozzle. In the diesel engine equipped with a turbocharger like this, a target supercharging pressure is determined from the rotational speed of the engine and the fuel injection amount, and the variable nozzle can be manipulated by feedback control so that the actual supercharging pressure that is calculated from the signal of a supercharging pressure sensor becomes the target supercharging pressure.

Incidentally, in the control of a diesel engine equipped with a turbocharger, various constraints in hardware or control exist, concerning the manipulation variables of actuators and the quantity of state of the engine. When these constraints are not satisfied, there is the fear of occurrence of breakage of the hardware and reduction in control performance. At least some of these constraints relate to supercharging pressure control, and therefore, the target supercharging pressure that is used in the above described feedback control is set at a value that can simultaneously satisfy these constraints and the response performance of the engine.

However, adaptation work of setting a target supercharging pressure at each rotational speed of the engine and each fuel injection amount is generally performed under a steady-state operation of the engine. If adaptation work under a transient operation in which the rotational speed of the engine is increasing is included, the number of steps required for the adaptation work becomes extremely large. Further, it is unreasonable to assume all transient operation conditions and perform adaptation of the target supercharging pressure without omission. Therefore, when the engine is under a transient operation, there is the fear that some constraints relating to supercharging pressure control are not satisfied. One of such constraints is the constraint relating to ensuring hardware reliability at the time of a transient operation, in more detail, at the time of acceleration. At the time of acceleration of an engine, an exhaust pressure is increased due to an increase in the fuel injection amount. Furthermore, since a difference between the target supercharging pressure and the actual supercharging pressure becomes large due to a delay in supercharging, feedback control works to increase the rotational speed of the turbine quickly to enhance the actual supercharging pressure, and the opening of a variable nozzle is decreased. As a result, the effect of the increase in the exhaust pressure due to the increase in the fuel injection amount, and the effect of the increase in the exhaust pressure accompanying the change in the variable nozzle opening coincide with each other, and an abrupt increase in the exhaust pressure is caused. When the exhaust pressure becomes too high, there is the fear that breakage occurs to the hardware of the exhaust system.

Note that as the literature that discloses the invention having an object of ensuring hardware reliability, Japanese Patent Laid-Open No. 2010-185415 can be cited. Japanese Patent Laid-Open No. 2010-185415 discloses the invention of supercharging pressure control that can avoid overshoot of the supercharging pressure that can occur at the time of acceleration in the one that controls the opening of the variable nozzle by open-loop control. According to the invention disclosed in Japanese Patent Laid-Open No. 2010-185415, at the time of a steady-state operation, a target intake air amount is calculated on the basis of the rotational speed of the engine and the fuel injection amount, and the target opening of the variable nozzle is determined on the basis of the target intake air amount. Meanwhile, at the time of acceleration, a target intake air amount deviation is calculated based on a deviation of the target supercharging pressure and the actual supercharging pressure, and the result of adding the target intake air amount deviation to the intake air amount is calculated as a supercharger control target intake air amount. Subsequently, the target opening of the variable nozzle is determined on the basis of the supercharger control target intake air amount. However, since a map value of the target intake air amount deviation is fixed by adaptation, the problem of requiring the extremely large number of steps for the adaptation work is not irrelevant to the invention disclosed in Japanese Patent Laid-Open No. 2010-185415. Further, under transient operation condition that is not assumed at the time of the adaptation work, there is the possibility that the supercharging pressure cannot be properly controlled, and the supercharging pressure is overshot.

Patent literature 2 discloses a control device of an internal combustion engine that performs feedback control of a nozzle opening of an exhaust turbine of a variable displacement turbocharger based on a supercharging pressure deviation and an exhaust pressure deviation.

### Citation List

### Patent Literature

Patent Literature 1: Japanese Patent Laid-Open No. 2010-185415
Patent Literature 2: JP 2010 203344 A

### Summary of Invention

The present invention addresses a problem of performing supercharging pressure control so as to ensure hardware reliability during a transient operation in a diesel engine equipped with a turbocharger capable of actively controlling a supercharging pressure by manipulation of an actuator. In order to solve the problem, a control device for the diesel engine equipped with the turbocharger according to the present invention is configured to perform the following operation.

According to one mode of the present invention, the present control device calculates an actual supercharging pressure of the engine from a signal of a supercharging pressure sensor, and calculates a first target value of the supercharging pressure on a basis of a rotational speed of an engine and a fuel injection amount. The control device manipulates an actuator for controlling the supercharging pressure by feedback control so as to bring the actual supercharging pressure to a value closer to the first target value. The actuator for controlling the supercharging pressure includes a variable nozzle of a variable geometry turbocharger and a wastegate valve. The above described operation according to the present control device is an operation that is performed irrespective of a steady-state operation time or a transient operation time. Namely, the control device does not positively determines the operation state of the engine, and does not switch the target value according to whether the operation state of the engine is a steady-state operation or a transient operation. However, only when a second target value that will be described next is set, the present control device changes a target value of feedback control from the first target value to the second target value.

The present control device sets the second target value of the supercharging pressure when an actual exhaust pressure is larger than a prescribed exhaust pressure standard, and an exhaust pressure change rate is larger than a prescribed exhaust pressure change rate standard. The actual exhaust pressure and the exhaust pressure change rate are calculated from a signal of an exhaust pressure sensor. The exhaust pressure standard is set to be a value lower than a limit exhaust pressure that can ensure reliability of hardware. According to the present control device, the second target value is set at a value lower than the first target value, and is more preferably set at the same value as that of the actual supercharging pressure that is calculated from the signal of the supercharging pressure sensor.

The present control device operates as above, whereby abrupt increase in the exhaust pressure during a transient operation is suppressed, and reliability of the hardware can be ensured. This is because the effect of increase in the exhaust pressure by feedback control can be prevented from coinciding with the effect of increase in the exhaust pressure by increase in the fuel injection amount. In particular, if the same value as that of the actual supercharging pressure is set as the second target value of the supercharging pressure, the present supercharging pressure is kept as it is, whereby the effect of suppressing increase in the exhaust pressure becomes more remarkable. Further, the first target value determined by the rotational speed of the engine and the fuel injection amount is normally used, and only when a prescribed condition is satisfied, the target value is changed to the above described second target value, whereby adaptation work with the extremely large number of steps does not have to be performed for each transient operation condition, and abrupt increase in the exhaust pressure can be suppressed in any transient operation condition.

### Brief Description of Drawings

[Figure 1] Figure 1 is a view showing a configuration of an engine system as an embodiment of the present invention.
[Figure 2] Figure 2 is a flowchart showing a routine for supercharging pressure control that is executed by a control device in the embodiment of the present invention.
[Figure 3] Figure 3 is a flowchart showing a subroutine for steady-state target value calculation that is executed by the control device in the embodiment of the present invention.
[Figure 4] Figure 4 is a flowchart showing a subroutine for transient target value calculation that is executed by the control device in the embodiment of the present invention.
[Figure 5] Figure 5 is a flowchart showing a subroutine for feedback control target value determination that is executed by the control device in the embodiment of the present invention.
[Figure 6] Figure 6 is a diagram showing control results obtained by the control device in the embodiment of the present invention.

### Description of Embodiment

An embodiment of the present invention will be described with reference to the drawings.

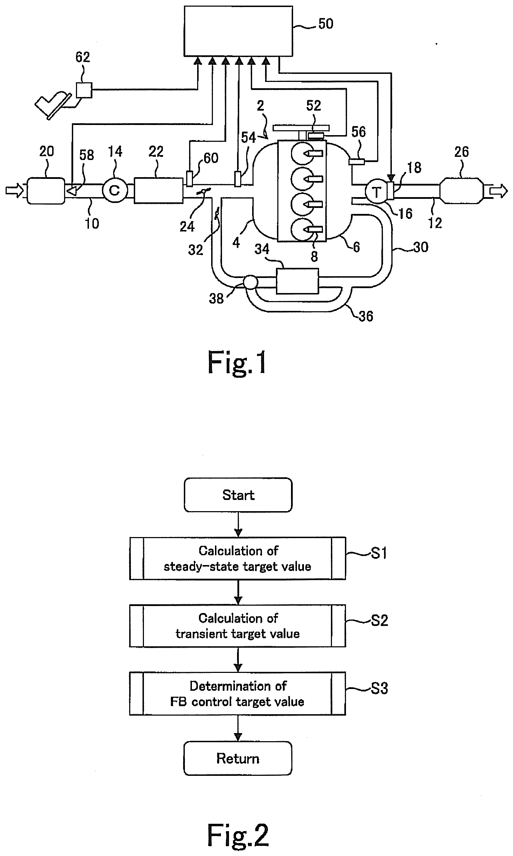

Figure 1 is a view showing a configuration of an engine system as the embodiment of the present invention. An engine of the present embodiment is a diesel engine equipped with a turbocharger (hereinafter, simply called an engine). A main body 2 of the engine is equipped with four cylinders in line, and an injector 8 is provided at each of the cylinders. An intake manifold 4 and an exhaust manifold 6 are attached to the engine main body 2. An intake passage 10 in which fresh air that is taken in from an air cleaner 20 flows is connected to the intake manifold 4. A compressor 14 of the turbocharger is attached to the intake passage 10. In the intake passage 10, a diesel throttle 24 is provided downstream of the compressor 14. In the intake passage 10, an intercooler 22 is included between the compressor 14 and the diesel throttle 24. An exhaust passage 12 for releasing exhaust gas that is emitted from the engine main body 2 into atmosphere is connected to the exhaust manifold 6. A turbine 16 of the turbocharger is attached to the exhaust passage 12. The turbocharger of the present embodiment is of a variable geometry type, and the turbine 16 is equipped with a variable nozzle 18. A catalyst unit 26 for purifying the exhaust gas is provided downstream of the turbine 16 in the exhaust passage 12.

The engine of the present embodiment is equipped with an EGR device that recirculates the exhaust gas to an intake system from an exhaust system. The EGR device connects a position downstream of the diesel throttle 24 in the intake passage 10 and the exhaust manifold 6 by an EGR passage 30. The EGR passage 30 is provided with an EGR valve 32. At an exhaust side of the EGR valve 32 in the EGR passage 30, an EGR cooler 34 is equipped. The EGR passage 30 is provided with a bypass passage 36 that bypasses the EGR cooler 34. At a spot where the bypass passage 36 merges with the EGR passage 30, a bypass valve 38 that switches a direction in which the exhaust gas flows is provided.

The engine system of the present embodiment is equipped with an ECU (Electronic Control Unit) 50. The ECU 50 is a control device that comprehensively controls the entire engine system. The ECU 50 takes in signals of sensors that are included in the engine system and processes the signals. The sensors are attached to respective locations of the engine system. For example, in the intake passage 10, an air flow meter 58 is attached downstream of the air cleaner 20, an intake air temperature sensor 60 is attached in the vicinity of an outlet of the intercooler 22, and a supercharging pressure sensor 54 is attached downstream of the diesel throttle. Further, an exhaust pressure sensor 56 is attached to the exhaust manifold 6. Furthermore, a rotational speed sensor 52 that detects rotation of a crankshaft, an accelerator opening sensor 62 that outputs a signal corresponding to an opening of an accelerator pedal and the like are attached. The ECU 50 processes the signals of the respective sensors that are taken in and manipulates the respective actuators in accordance with a prescribed control program. The actuators that are manipulated by the ECU 50 include the variable nozzle 18, the injector 8, the EGR valve 32, the diesel throttle 24 and the like. Note that a number of actuators and sensors that are connected to the ECU 50 are present other than those shown in the drawing, but explanation thereof will be omitted in the present description.

Engine control that is executed by the ECU 50 includes supercharging pressure control and EGR control. In the supercharging pressure control of the present embodiment, the variable nozzle 18 is manipulated by feedback control so that an actual supercharging pressure calculated from a signal of the supercharging pressure sensor 54 becomes a target supercharging pressure. In the EGR control, the EGR valve 32 is manipulated by feedback control so that an actual EGR rate calculated from signals of the various sensors becomes a target EGR rate. Of the engine control as above, the supercharging pressure control is especially characteristic in the present embodiment. However, in carrying out the present invention, there is no limitation concerning the specific method of the feedback control in the supercharging pressure control. In the present embodiment, in both the supercharging pressure control and the EGR control, PID control based on a difference between an actual value and a target value is assumed to be performed. The supercharging pressure control that is executed in the present embodiment has a feature in a method for determining a target supercharging pressure. Hereinafter, this will be described with use of flowcharts.

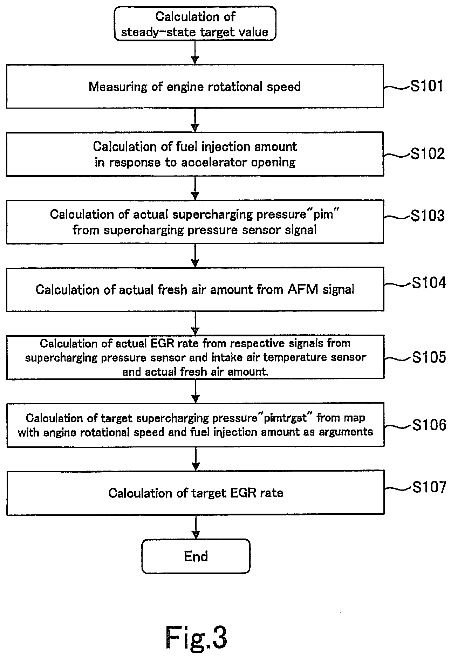

A flowchart of Figure 2 shows a routine for the supercharging pressure control that is executed by the ECU 50 in the present embodiment. In the routine, EGR control is performed at the same time. The routine of the supercharging pressure control is configured by step S1 of calculating a steady-state target value, step S2 of calculating a transient target value, and step S3 of determining a target value (an FB control target value) that is used in feedback control finally. In the respective steps, subroutines shown in flowcharts in Figure 3, Figure 4 and Figure 5 are respectively executed.

The flowchart of Figure 3 shows the subroutine that is executed in step S1 of the supercharging pressure control routine. In the subroutine, a steady-state target value is calculated for each of the supercharging pressure and the EGR rate. A steady-state target value means a target value that is determined with use of data that is adapted under a steady-state operation of the engine.

In step S101 of the subroutine, the rotational speed of the engine is calculated from the signal of the rotational speed sensor 52. In step S102, a fuel injection amount is calculated in response to an accelerator opening that is obtained from the signal of the accelerator opening sensor 62. In step S103, an actual supercharging pressure is calculated from the signal of the supercharging pressure sensor 54. Note that in the following explanation, the actual supercharging pressure is described as "pim" in some cases. In step S104, an actual fresh air amount is calculated from the signal of the air flow meter 58. The actual fresh air amount is the amount of fresh air that is actually taken into the cylinders. In step S105, an actual EGR rate is calculated from the respective signals from the supercharging pressure sensor 54 and the intake air temperature sensor 60 and the actual fresh air amount. The processing of the above steps is the processing for obtaining data necessary for calculation of the steady-state target value. Accordingly, the sequences of the respective steps can be properly changed.

Calculation of the steady-state target value is performed in step S106 and step S107. In step S106, the supercharging pressure of the target is calculated from a map with the rotational speed of the engine and the fuel injection amount as arguments. The target supercharging pressure that is calculated in the step is a target value that is adapted under the steady-state operation of the engine, that is, the steady-state target value of the supercharging pressure. Further, this is also a first target value of the supercharging pressure in the present invention. The map for use in calculation of the steady-state target value is created on the basis of the adaptation data obtained by conducting a test under the steady-state operation while the rotational speed of the engine and the fuel injection amount are respectively changed by constant amounts. Note that in the following explanation, the steady-state target value of the supercharging pressure will be described as "pimtrgst" in some cases. In step S107, the target EGR rate is calculated on the basis of the fresh air amount. A relation between the fresh air amount and the target EGR rate is determined so that an oxygen concentration of the air that is taken into the cylinders becomes a target value, within the range in which the EGR rate does not exceed the limit of the EGR rate that does not generate smoke. The target EGR rate that is calculated in the step is the target value that is adapted under the steady-state operation of the engine, that is, the steady-state target value of the EGR rate. Note that both the value that realizes the target intake air oxygen concentration and the value to be the smoke limit are calculated, and the smaller value of them may be set as the target EGR rate.

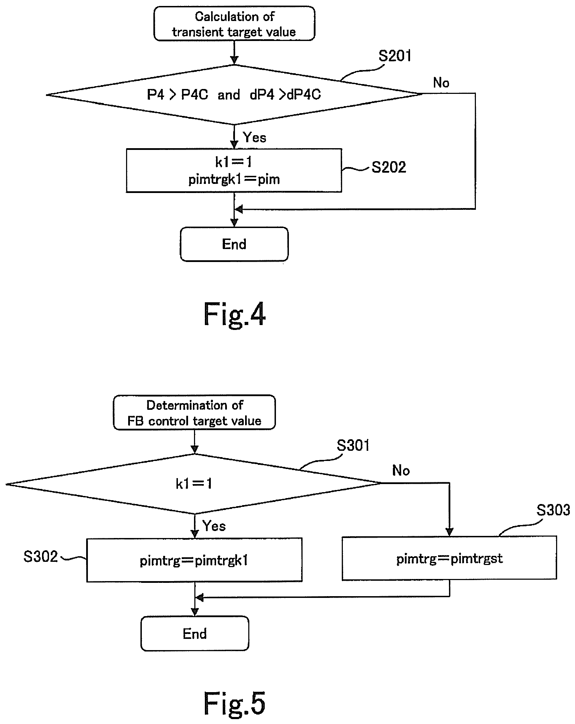

The flowchart of Figure 4 shows the subroutine that is executed in step S2 of the supercharging pressure control routine. In the subroutine, a transient target value of the supercharging pressure is calculated. The transient target value relates to a prescribed condition that is likely to be satisfied at the time of a transient operation of the engine, and refers to a target value that is set only when the condition is satisfied. Further, the transient target value is also a second target value of the supercharging pressure in the present invention. The steady-state target value of the supercharging pressure that is calculated in step S1 of the supercharging pressure control routine is on the precondition of the case in which the engine is under the steady-state operation. Therefore, at the time of a transient operation such as at the time of acceleration and at the time of deceleration, a certain constraint relating to the supercharging pressure control is not satisfied in some cases. What especially matters in the supercharging pressure control of the present embodiment is the constraint relating to ensuring hardware reliability. In more detail, it is the constraint for preventing breakage of the exhaust system that occurs as a result that the exhaust pressure becomes excessively high. In the subroutine, it is predicted according to whether the prescribed condition is satisfied or not that the constraint relating to ensuring hardware reliability is not satisfied. Only when it is predicted that the constraint is not satisfied, the target value of the supercharging pressure that can reliably satisfy the constraint is calculated as the transient target value.

In step S201 of the subroutine, it is determined whether the condition relating to the exhaust pressure and the exhaust pressure change rate is satisfied. The condition is that an actual exhaust pressure "P4" that is measured by the exhaust pressure sensor 56 is larger than a prescribed exhaust pressure standard "P4C" and a change rate "dP4" of the actual exhaust pressure is larger than a prescribed exhaust pressure change rate standard "dP4C". The exhaust pressure standard "P4C" is set at a value lower than a limit in design of the exhaust pressure which can ensure the reliability of the hardware of the exhaust system. The exhaust pressure change rate standard "dP4C" is determined on the basis of an allowance for a the reliability ensuring limit of the exhaust pressure standard "P4C", and a response speed of the supercharging pressure control. If the allowance for the reliability ensuring limit of the exhaust pressure standard "P4C" is large, the value of the exhaust pressure change rate standard "dP4C" can be made large. However, as the exhaust pressure standard "P4C" is set at a value closer to the reliability ensuring limit, the exhaust pressure change rate standard "dP4C" needs to be set at a smaller value. When the condition of step S201 is satisfied, it is predicted that the exhaust pressure exceeds the reliability ensuring limit in the near future. Thus, when the condition of step S201 is satisfied, processing of step S202 is performed. In step S202, the value of the actual supercharging pressure "pim" that is calculated from the signal of the supercharging pressure sensor 54 is set as the transient target value "pimtrgk1" of the supercharging pressure so as to keep the present supercharging pressure intact. Further, a value of a flag k1 indicating that the transient target value is set is set at 1.

The flowchart of Figure 5 shows a subroutine that is executed in step S3 of the supercharging pressure control routine. In the initial step S301 of the subroutine, it is determined whether the value of the flag k1 is set at "1". The value of the flag k1 being "1" means that the transient target value of the supercharging pressure is set, and the value of the flag k1 being "0" means that the transient target value is not set. Therefore, if the value of the flag k1 is "0", processing of step S303 is selected, and the steady-state target value "pimtrgst" of the supercharging pressure that is calculated in step S1 is directly determined as the FB control target value "pimtrg". However, if the value of the flag k1 is "1", processing of step S302 is selected, and the transient target value "pimtrgk1" of the supercharging pressure that is calculated in step S2 is determined as the FB control target value "pimtrg". Namely, temporary change of the FB control target value is performed to the transient target value from the steady-state target value.

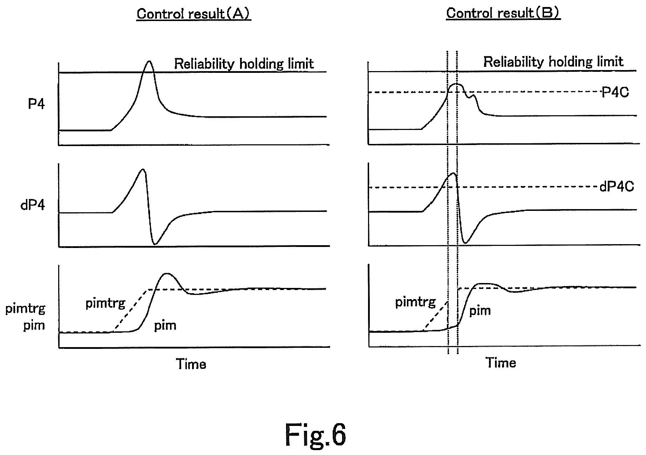

The supercharging pressure control routine described above is executed by the ECU 50, whereby abrupt increase in the exhaust pressure during a transient operation is suppressed and reliability of the hardware of the exhaust system is ensured. The effect can be described with use of Figure 6. Figure 6 shows two control results concerning supercharging pressure control at the time of acceleration. A control result (A) is a result of performing supercharging pressure control by always using only the steady-state target value, that is, a control result of a case in which setting of the transient target value is not performed. Meanwhile, a control result (B) is a control result of a case in which the transient target value is set by the supercharging pressure control of the present embodiment. In an upper stage of the respective control results, charts each showing a change with a time of the exhaust pressure "P4" are written. In a middle stage, charts each showing a change with time of the exhaust pressure change rate "dP4" are written. In a lower stage, charts each showing a change with a time of the FB control target value "pimtrg" of the supercharging pressure and the actual supercharging pressure "pim" are written.

First, seen from the control result (A), the exhaust pressure "P4" abruptly increases, and exceeds the reliability holding limit of the exhaust pressure, though only temporarily. This is because the effect of increase in the exhaust pressure by increase in the fuel injection amount, and the effect of increase in the exhaust pressure by feedback control of the supercharging pressure coincide with each other. At the time of acceleration, the fuel injection amount is increased by a driver depressing the accelerator pedal, and the exhaust pressure increases by increase in combustion energy. Further, at the time of acceleration, the steady-state target value of the supercharging pressure is also made large in response to increase in the fuel injection amount, but the turbocharger involves a supercharging delay, and therefore, the difference between the FB control target value "pimtrg" and the actual supercharging pressure "pim" is temporarily enlarged. Therefore, feedback control works to increase the rotational speed of the turbine rapidly to enhance the actual supercharging pressure "pim", and the opening of the variable nozzle 18 is decreased. As a result, the exhaust pressure further increases.

In contrast with the above, in the control result (B), while the actual exhaust pressure "P4" is larger than the exhaust pressure standard "P4C", and the actual exhaust pressure change rate "dP4" is larger than the exhaust pressure change rate standard "dP4C", the FB control target value "pimtrg" is changed to the same value as that of the actual supercharging pressure "pim". Thereby, the variable nozzle 18 is manipulated to keep the current supercharging pressure, and the increase in the exhaust pressure by feedback control of the supercharging pressure is suppressed. As a result, the effect of increase in the exhaust pressure by the feedback control of the supercharging pressure is avoided from coinciding with the effect of increase in the exhaust pressure by increase in the fuel injection amount, and a maximum value of the actual exhaust pressure "P4" is suppressed to be lower than the reliability holding limit. Thereafter, when the actual exhaust pressure "P4" becomes smaller than the exhaust pressure standard "P4C", or the actual exhaust pressure change rate "dP4" becomes smaller than the exhaust pressure change rate standard "dP4C" as shown in the drawing, the FB control target value "pimtrg" is changed to the steady-state target value that is fixed from the rotational speed of the engine and the fuel injection amount again. At this point of time, a peak of the effect of increase in the exhaust pressure by increase in the fuel injection amount already passes, and therefore, even if the effect of increase in the exhaust pressure by the feedback control of the supercharging pressure appears, the actual exhaust pressure "P4" does not significantly increase again. Thereby, even during acceleration in which the exhaust pressure increases, reliability of the hardware of the exhaust system is ensured.

Incidentally, the present invention is not limited to the aforementioned embodiment, and can be carried out by being variously modified within the range without departing from the gist of the present invention. For example, the transient target value that is the second target value can be a value that is lower than the steady-state target value that is the first target value. When the condition of step S201 is satisfied, a fixed effect can be obtained only by simply reducing the target value of the feedback control. However, it is more preferable that the second target value is set at the same value as that of the actual supercharging pressure to keep the current supercharging state as in the aforementioned embodiment.

Further, as the supercharging pressure controlling actuator, a wastegate value can be used besides the variable nozzle. However, the wastegate valve in that case desirably can change the opening continuously or in multiple stages.

### Description of Reference Numerals

- 2: Engine main body
- 4: Intake manifold
- 6: Exhaust manifold
- 8: Injector
- 10: Intake passage
- 12: Exhaust passage
- 14: Compressor
- 16: Turbine
- 18: Variable nozzle
- 30: EGR passage
- 32: EGR valve
- 50: ECU
- 52: Rotational speed sensor
- 54: Supercharging pressure sensor
- 56: Exhaust pressure sensor
- 58: Air flow meter
- 60: Intake air temperature sensor
- 62: Accelerator opening sensor

## Claims

1. A control device for a diesel engine (2) equipped with a turbocharger (14, 16) capable of actively controlling a supercharging pressure by manipulation of an actuator (18), comprising:
means for calculating an actual supercharging pressure of the engine (2) from a signal of a supercharging pressure sensor (54);
means for calculating a first target value of the supercharging pressure on a basis of a rotational speed of the engine (2) and a fuel injection amount;
means for manipulating the actuator (18) by feedback control so as to bring the actual supercharging pressure to a value closer to the first target value;
means for calculating an actual exhaust pressure and an exhaust pressure change rate of the engine (2) from a signal of an exhaust pressure sensor (56);
**characterized by** comprising:
means for setting a second target value that is lower than the first target value, when the actual exhaust pressure is larger than a prescribed exhaust pressure standard, and the exhaust pressure change rate is larger than a prescribed exhaust pressure change rate standard; and
means for changing a target value of the feedback control to the second target value from the first target value, when the second target value is set.

2. The control device for a diesel engine (2)_equipped with a turbocharger (14, 16) according to claim 1,
wherein the means for setting the second target value sets a same value as that of the actual supercharging pressure as the second target value.

## Patentansprüche

1. Steuervorrichtung für einen mit einem Turbolader (14, 16) ausgerüsteten Dieselmotor (2), die in der Lage ist, durch Betätigung eines Aktors (18) einen Ladedruck aktiv zu steuern, umfassend:
Mittel zum Berechnen eines Ist-Ladedrucks des Motors (2) aus einem Signal eines Ladedrucksensors (54),
Mittel zum Berechnen eines ersten Zielwertes des Ladedrucks auf Basis einer Rotationsgeschwindigkeit des Motors (2) und einer Treibstoffeinspritzmenge,
Mittel zum Betätigen des Aktors (18) durch eine Regelung, um den Ist-Ladedruck auf einen Wert zu bringen, der näher an dem ersten Zielwert liegt,
Mittel zum Berechnen eines Ist-Abgasdrucks und einer Abgasdruckänderungsrate des Motors (2) aus einem Signal des Abgasdrucksensors (56),
**dadurch gekennzeichnet, dass** sie umfasst:
Mittel zum Einstellen eines zweiten Zielwerts, der niedriger ist als der erste Zielwert, wenn der Ist-Abgasdruck höher ist als ein vorgegebenes Abgasdruckniveau und die Abgasdruckveränderungsrate höher ist als ein vorgegebenes Niveau der Abgasdruckänderungsrate, und
Mittel zum Ändern eines Zielwerts der Regelung von dem ersten Zielwert auf den zweiten Zielwert, wenn der zweite Zielwert eingestellt ist.

2. Steuervorrichtung für einen mit einem Turbolader (14, 16) ausgerüsteten Dieselmotor (2) nach Anspruch 1,
wobei die Mittel zum Einstellen des zweiten Zielwertes einen gleichen Wert wie den des Ist-Ladedrucks als zweiten Zielwert einstellen.

## Revendications

1. Dispositif de commande pour un moteur diesel (2) équipé d'un turbocompresseur (14, 16) capable de commander de manière active une pression de suralimentation par la manipulation d'un dispositif d'actionnement (18), comportant :
des moyens destinés à calculer une pression de suralimentation réelle du moteur (2) à partir d'un signal d'un capteur de pression de suralimentation (54) ;
des moyens destinés à calculer une première valeur de cible de la pression de suralimentation sur la base d'une vitesse de rotation du moteur (2) et d'une quantité d'injection de carburant ;
des moyens destinés à manipuler le dispositif d'actionnement (18) par commande de rétroaction de façon à amener la pression de suralimentation réelle à une valeur plus proche de la première valeur de cible ;
des moyens destinés à calculer une pression d'échappement réelle et un taux de changement de pression d'échappement du moteur (2) à partir d'un signal d'un capteur de pression d'échappement (56) ;
**caractérisé en ce qu'**il comporte
des moyens destinés à établir une deuxième valeur de cible qui est inférieure à la première valeur de cible, quand la pression d'échappement réelle est plus grande qu'une norme de pression d'échappement prescrite, et le taux de changement de pression d'échappement est plus grand qu'une norme de taux de changement de pression d'échappement prescrite ; et
des moyens destinés à changer une valeur de cible de la commande de rétroaction à la deuxième valeur de cible à partir de la première valeur de cible, quand la deuxième valeur de cible est établie.

2. Dispositif de commande pour un moteur diesel (2) équipé d'un turbocompresseur (14, 16) selon la revendication 1,
dans lequel les moyens destinés à établir la deuxième valeur de cible établissent une même valeur que celle de la pression de suralimentation réelle comme deuxième valeur de cible.
